**Europäisches Patentamt**

**European Patent Office**

**Office européen des brevets**

(19)

(11) Veröffentlichungsnummer: **0 005 210**
**A1**

(12) # EUROPÄISCHE PATENTANMELDUNG

(21) Anmeldenummer: **79101177.8**

(22) Anmeldetag: **18.04.79**

(51) Int. Cl.²: **B 23 P 19/02**, E 06 B 3/26, B 25 B 1/06

(30) Priorität: **19.04.78 AT 2759/78**

(43) Veröffentlichungstag der Anmeldung: **14.11.79** Patentblatt **79/23**

(84) Benannte Vertragsstaaten: **CH DE FR GB SE**

(71) Anmelder: **Vereinigte Metallwerke Ranshofen-Berndorf AG, Wohllebengasse 9, A-1041 Wien IV (AT)**

(72) Erfinder: **Uhlirsch, Kurt, Dipl.-Ing., Lieglstrasse 4, A-5280 Braunau (AT)**
Erfinder: **Oswald, Peter, Vogelbeerweg 12, A-5280 Braunau (AT)**
Erfinder: **Lindhuber, Hermann, Mozartstrasse 38, A-5280 Braunau (AT)**

(74) Vertreter: **Hain, Leonhard, Dipl.-Ing., Tal 18/IV, D-8000 München 2 (DE)**

(54) **Verfahren und Vorrichtung zum Verspannen von wärmeisolierenden Kunststoffzwischenstücken bei wärmegedämmten Mehrfachprofilen aus Metall.**

(57) Die Verspannung mehrteiliger Verbindungsklötze (5, 6) in Nuten von Rahmenprofilen und dgl. erfolgt in der Regel durch Keilstücke (4), die von Hand bzw. mit einem Handwerkzeug wie Hammer eingetrieben werden, wobei jedoch die erforderliche Gleichmässigkeit nicht erreicht werden kann und Verziehungen und Beschädigungen die Folge sind. Durch die vorliegende Erfindung erfolgt dieses Eintreiben der Keilstücke (4) durch mechanisch betätigte Backen (1, 2) die durch mechanische, elektrische oder elektro-pneumatische Antriebe mit dosierbarer Kraft einwirken, so dass eine gleichmässige Verspannung aller Klötze gewährleistet ist.

EP 0 005 210 A1

-1-

Anmelder: Vereinigte Metallwerke Ranshofen-Berndorf AG,
Wohllebengasse 9, Wien (Österreich)

Titel: Verfahren und Vorrichtung zum Verspannen von
wärmeisolierenden Kunststoffzwischenstücken
bei wärmegedämmten Mehrfachprofilen aus Metall

Beschreibung

Um die Wärmedämmung zu verbessern und das unangenehme
Schwitzen bei Metallfenstern zu vermeiden, ist es bekannt,
solche Fensterrahmen aus zwei getrennten Metallprofilen
herzustellen, die durch wärmeisolierende Zwischenlagen aus
Kunststoff voneinander distanziert sind. Da ein durchgehendes Kunststoffprofil nicht erforderlich ist, werden in
neuerer Zeit einzelne im Abstand voneinander versetzte
Kunststoffzwischenstücke angewendet, die in Nuten der zu
verbindenden Metallprofile eingreifen und dort durch
Klemmung verspreizt sind. Diese Klemmung wird durch Schrauben, Keilflächen oder Drehkeile bewirkt, welche eine Verspannung durch Auseinandertreiben der Stege bewirken. Das
Anziehen dieser Befestigungsmittel erfolgt in der Regel
durch händisch betriebene oder gesteuerte Vorrichtungen
nach Gefühl der Bedienungsperson. Es ergeben sich damit
zwangsläufig unterschiedliche Klemmeinstellungen, die wiederum unterschiedliche Deformationen der beteiligten Werkstücke hervorrufen und damit nicht nur zu Brüchen und Beschädigungen von Einzelteilen bei Überbeanspruchung, sondern auch zu unterschiedlichen Verformungen und damit Abständen der Teilprofile führen können. Auch Winkelverdrehungen sind möglich und führen dann beim Zusammenbau der Fenster nicht nur zu unterschiedlichen Gehrungsstufen, sondern auch zu Schwierigkeiten bei der Verglasung und Beschlagsmontage.

Erfindungsgemäß werden alle diese Nachteile dadurch vermieden, daß die Betätigung der Spreizelemente kraftdosiert erfolgt, um unerwünschte Verformungen zu unterbinden.

Die Erfindung ist anhand von Ausführungsbeispielen, die in der Zeichnung dargestellt sind, näher beschrieben. Es zeigen:

Fig. 1 und 2  eine durch Hydraulik oder Pneumatik betätigte Vorrichtung mit Dosierfeder in Auf- und Kreuzriß,

Fig. 3 und 4  eine ähnliche Einrichtung, jedoch mit Druckregelung des Druckmediums,

Fig. 5 und 6  eine über Spindel und Rutschkupplung betätigte Klemmbackenvorrichtung mit Getriebemotor und

Fig. 7 und 8  eine Ausführung mit Zahnstangentrieb und Drehmomentbegrenzer am Bedienungshebel.

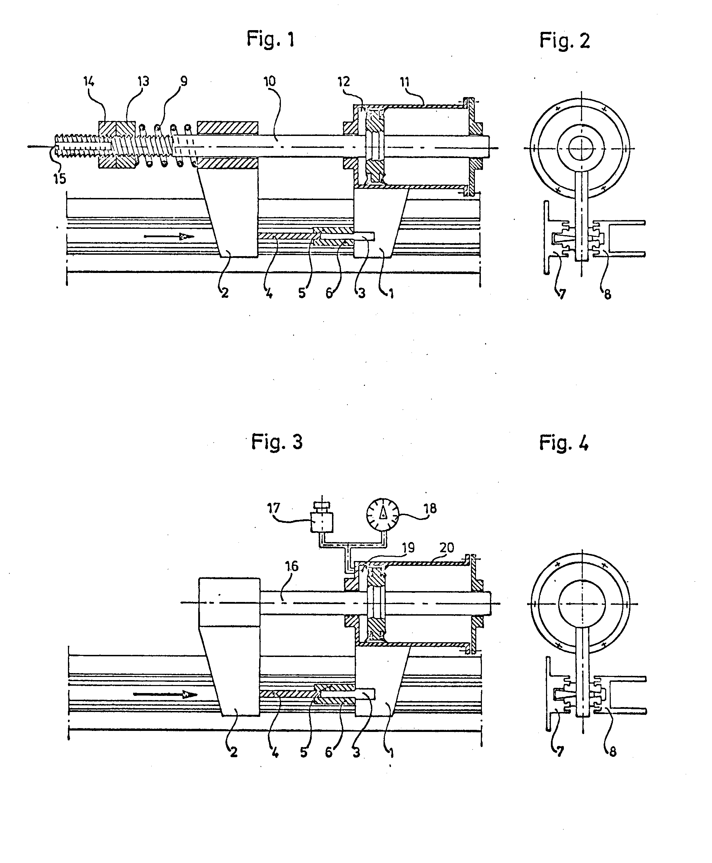

Wie man aus der Zeichnung Fig. 1 und 2 ersehen kann, werden zwei Teilprofilstäbe 7 und 8 durch zwischen sie eingeschobene Kunststoffzwischenstücke 5,6 miteinander verbunden, wobei diese Stege 5,6 durch ein zwischen sie eingetriebenes Keilstück 4 verspreizt und damit verspannt werden. Zum Eintreiben des Keilstückes 4 dienen Klemmbacken 1,2, welche das Keilstück 4 in Profillängsrichtung zwischen die Stege 5,6 einschieben, wobei die Klemmbacke 1 eine Ausnehmung 3 besitzt. Die Klemmbacke 1 ist als feste Spannbacke mit einem pneumatischen oder hydraulischen Zylinder 11 verbunden, dessen Kolben über eine Kolbenstange 10 unter Wirkung des Druckmittels im Raum 12 auf die bewegliche Spannbacke 2 über eine Feder 9 einwirkt, so daß diese in Pfeilrichtung verschoben den Keil zwischen die Stege 5,6 eintreibt. Zur Kraftbegrenzung dient die Feder 9, welche über eine Einstellmutter 13 auf der Kolbenstange 10 nach einer Skala 15 eingestellt wird und mit einer Gegenmutter 14 gesichert werden kann.

Gemäß Fig. 3 und 4 erfolgt die Regelung der Spannkraft für die Spannbacken 1,2 über eine Druckbegrenzung des im Arbeitsraum 19 des Zylinders 20 wirkenden Druckes des Druckmediums, welches über ein einstellbares Reduzierventil 17 mit Manometer 18 zugeführt wird. Es kann auch durch ein Sicherheits- oder Überdruckventil der Druck geregelt werden, der über die Kolbenstange 16 auf die bewegliche Klemmbacke 2 einwirkt.

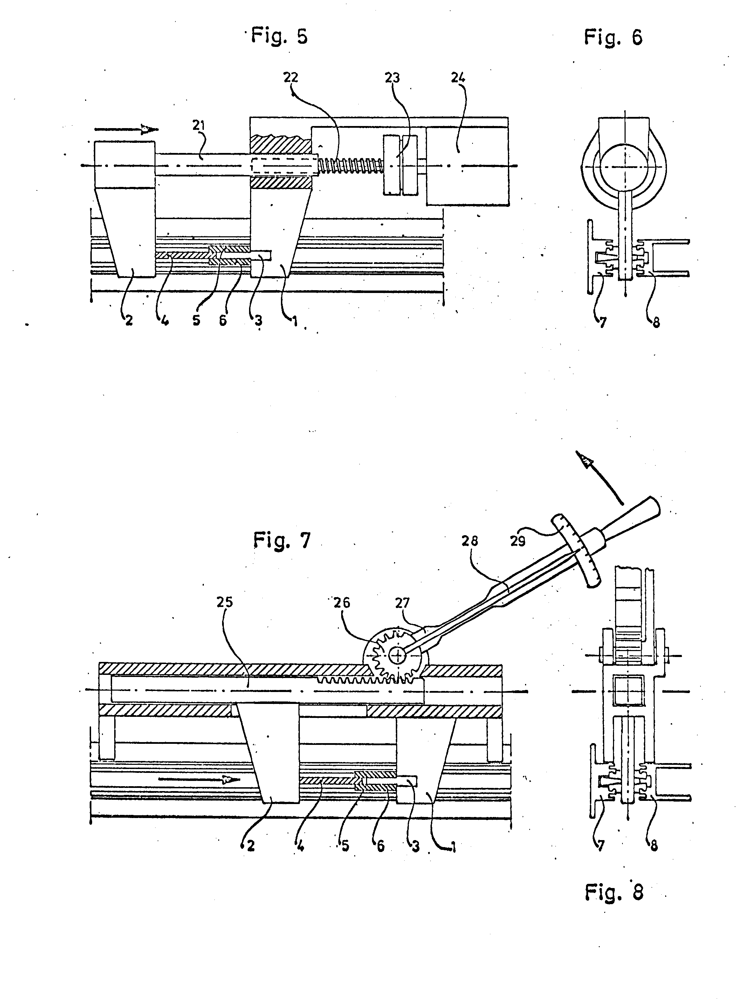

Bei der in Fig. 5 und 6 gezeigten Vorrichtung erfolgt die Betätigung der Klemmbacken 1 und 2 über eine Stange 21 mit innenliegendem Gewinde, in das eine von einem Getriebemotor 24 über eine einstellbare Rutschkupplung 23 angetriebene Spindel 22 greift. Hier sorgt die Rutschkupplung 23 dafür, daß keine übermäßigen Kräfte ausgeübt werden können.

In den Fig. 7 und 8 ist schließlich und endlich eine händisch betätigbare Klemmvorrichtung gezeigt, bei der die bewegliche Backe 2 mit einer Zahnstange 25 in Verbindung steht, die von einem Ritzel 26 verschoben wird. Der Antrieb des Ritzels 26 erfolgt über einen federnden Betätigungshebel 27 mit Zeiger 28 und Skala 29, auf denen das ausgeübte Drehmoment abgelesen werden kann. Es kann auch ein Drehmomentschlüssel mit federbelasteter Ratsche zur automatischen Kraftregelung verwendet werden. Solche Drehmomentschlüssel eignen sich auch zum Anziehen der nicht dargestellten Verbindungsstücke mit Schraube oder Drehkeile, wie sie bei manchen Konstruktionen derartiger Verbundprofile vorkommen.

-1-

Anmelder: Vereinigte Metallwerke Ranshofen-Berndorf AG,
Wohllebengasse 9, Wien (Österreich)

Titel: Verfahren und Vorrichtung zum Verspannen von
wärmeisolierenden Kunststoffzwischenstücken
bei wärmegedämmten Mehrfachprofilen aus Metall

Patentansprüche

1. Verfahren zum Verspannen von wärmeisolierenden Kunststoffzwischenstücken bei wärmegedämmten Mehrfachprofilen
aus Metall, dadurch gekennzeichnet, daß die Betätigung
der Spreizelemente kraftdosiert erfolgt, um unerwünschte
Verformungen zu unterbinden.

2. Vorrichtung zur Durchführung des Verfahrens nach Anspruch 1, dadurch gekennzeichnet, daß die mit den Verschiebeteilen (4,5,6) des Kunststoffzwischenstückes in
Eingriff stehenden Teile (1,2) einer mechanischen Spannvorrichtung über Kraftbegrenzer wie Rutschkupplungen (23),
Feder (9), druckgeregelte Hydrauliken oder Pneumatiken (11,20) betätigt sind.

3. Vorrichtung nach Anspruch 2, dadurch gekennzeichnet,
daß die Backen (1,2) der Spannvorrichtung über eine elektromotorisch betriebene Spindel (22) mit Rutschkupplung
(23) angetrieben sind.

4. Vorrichtung nach Anspruch 2, dadurch gekennzeichnet,
daß die Backen (1,2) einen Zahnstangentrieb (25,26) besitzen, der über ein Ritzel (26) mit Drehmomentschlüssel
(27) händisch betätigt ist.

5. Vorrichtung nach Anspruch 2, dadurch gekennzeichnet, daß
ein hydraulischer oder pneumatischer Kolben zum Antrieb der
Backen (1,2) vorgesehen ist, dessen Druck über einen Druckregler (17) (Reduzier- oder Sicherheitsventil) oder eine Feder (9) an der Kolbenstange (10) genau einstellbar ist.

Fig. 1

Fig. 2

Fig. 3

Fig. 4

Fig. 5

Fig. 6

Fig. 7

Fig. 8

Europäisches
Patentamt

**EUROPÄISCHER RECHERCHENBERICHT**

| | | | |
|---|---|---|---|
| **EINSCHLÄGIGE DOKUMENTE** | | | **KLASSIFIKATION DER ANMELDUNG (Int.Cl.²)** |
| Kategorie | Kennzeichnung des Dokuments mit Angabe, soweit erforderlich, der maßgeblichen Teile | betrifft Anspruch | B 23 P 19/02<br>E 06 B 3/26<br>B 25 B 1/06 |
| | DE - A - 2 108 894 (VEREINIGTE DEUTSCHE METALLWERKE)<br><br>* Seite 1, Absatz 1; Seite 2, Absätze 2-4; Seite 3, Absätze 2,9; Seite 4, Absätze 1,2; Seite 5, Absatz 2; Figuren 1-4 *<br><br>-- | 1,2 | |
| | GB - A - 457 050 (ARNOTT)<br><br>* Seite 2, Zeilen 66-110; Seite 3, Zeilen 1-15; Figuren 1,2 *<br><br>-- | 1,2,5 | |
| | | | **RECHERCHIERTE SACHGEBIETE (Int. Cl.²)** |
| | DE - B - 1 297 554 (HILMA)<br><br>* Spalte 1, Zeilen 1-68; Spalte 2, Zeilen 1-68; Spalte 3, Zeilen 1-53; Figuren 1,2 *<br><br>-- | 2,5 | B 23 P<br>B 25 B<br>E 06 B |
| | US - A - 3 887 985 (ZENON)<br><br>* Spalte 2, Zeilen 43-67; Spalte 3, Zeilen 1-3; Figuren 1,2 *<br><br>-- | 4 | |
| A | CH - A - 507 455 (HIRSCH)<br><br>* Spalte 2, Zeilen 11-32; Figuren 1,2 *<br><br>---- | 1,2,5 | |
| | | | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |
| Recherchenort<br><br>Den Haag | Abschlußdatum der Recherche<br><br>19-07-1979 | | Prüfer<br><br>DEPOORTER |

EPA form 1503.1   06.78